# DEMANDE DE BREVET EUROPEEN

(11) **EP 0 901 180 A1**
(43) Date de publication de la demande: **10.03.1999**
(21) Numéro de dépôt: 98402068.5
(22) Date de dépôt: 17.08.1998
(51) Int. Cl.: H01M 10/40

(54) **Générateur rechargeable au lithium à électrolyte organique et anode de carbone**

(30) Priorité: 29.08.1997 FR 9710822
(71) Demandeur: ALCATEL, 75008 Paris (FR)
(72) Inventeur: Jehoulet, Christophe, 91220 Le Plessis Pate (FR); Moteau, Cécile, 91620 La Ville Du Bois (FR)
(74) Mandataire: Laroche, Danièle

(57) **Abrégé**

La présente invention a pour objet un générateur électrochimique étanche rechargeable au lithium comportant une cathode, une anode contenant un matériau carboné et un électrolyte comprenant un sel de lithium et au moins un solvant organique, caractérisé en ce que ledit électrolyte comporte en outre un additif soluble dans l'électrolyte, qui est un composé organique comportant un atome X relié à au moins un atome d'oxygène, la ou les liaisons X-oxygène étant électroniquement conjuguées avec au moins une liaison insaturée et X représentant un atome de soufre ou de carbone, ledit composé étant choisi parmi les composés de formule générale (I) et (II) suivantes 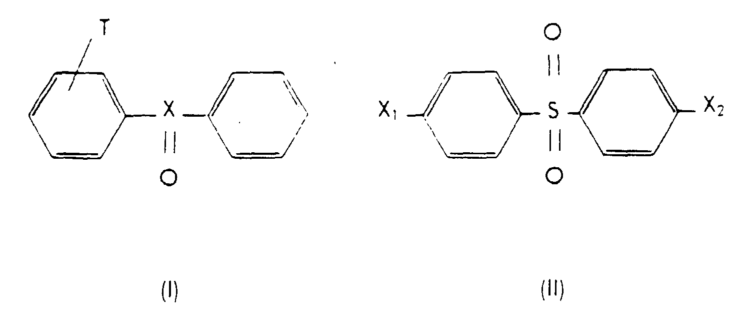 dans laquelle T, X₁ et X₂ représentent indépendamment l'un de l'autre un groupement donneur d'électrons choisi parmi H, R, OH, OR, NH2, NHR, SH, SR, l, F, CI, Br, R étant un substituant alkyle comportant 1 à 6 atomes de carbone, T étant en position ortho ou para.

## Description

La présente invention concerne un nouveau générateur électrochimique étanche rechargeable au lithium comportant une anode contenant un matériau carboné et un électrolyte organique comprenant un sel de lithium et au moins un solvant organique.

Lors de la première charge d'un générateur électrochimique rechargeable comportant une anode de carbone et un électrolyte contenant un sel de lithium et au moins un solvant organique, une partie de l'électrolyte est consommée. En effet, il se produit à l'anode de carbone une réduction du ou des solvants organiques contenus dans l'électrolyte, qui résulte en la formation d'une couche de passivation à la surface de l'anode de carbone.

Il a été déjà observé que la passivation de l'anode de carbone lors de la première charge s'accompagne d'un dégagement gazeux provenant de la décomposition des molécules du ou des solvants contenus dans l'électrolyte (S. BARUSSEAU et al., Jnl. of Power Sources, vol.54 (1995) p.296-300 ; D. AURBACH et al. Jnl. of Electrochem. Soc., vol.143 (1996) p.3809-3820, et réf. incluses, A.N. DEY et B.P. SULLIVAN, Jnl. of Electrochem. Soc., vol.117 (1970) p.222-224).

En particulier, lorsque l'électrolyte comprend du carbonate d'éthylène et du carbonate de propylène, on a observé que la couche de passivation formée par la réduction du carbonate de propylène et du carbonate d'éthylène, est constituée d'alkylcarbonates de lithium et de carbonate de lithium.

En outre, on a mis en évidence que la réduction du carbonate d'éthylène et du carbonate de propylène s'accompagne d'un dégagement gazeux important. Le carbonate d'éthylène et le carbonate de propylène forment respectivement, lors de leur réduction, de l'éthylène et du propylène gazeux.

La quantité de gaz libéré au sein d'un générateur rechargeable au lithium comportant une anode de carbone, qui provient de la décomposition du ou des solvants organiques contenus dans l'électrolyte, est souvent non négligeable et provoque un gonflement de l'enceinte étanche du générateur qui peut s'avérer critique dans le cas des accumulateurs prismatiques.

Une solution permettant d'éviter la surpression générée en première charge consiste à effectuer cette première charge non pas en "conditions étanches" (lorsque l'enceinte du générateur est scellée) mais en "conditions ouvertes" (lorsque l'enceinte du générateur n'est pas encore scellée) pour laisser le gaz formé s'échapper.

Une première charge en conditions ouvertes nécessite l'utilisation d'équipements de sécurité adéquats étant donné que le ou les solvants couramment utilisés pour constituer l'électrolyte sont des solvants volatiles.

En outre, il a été observé que la couche de passivation formée par la réduction électrochimique du ou des solvants organiques contenus dans l'électrolyte n'est pas complète, pour des questions de cinétique de réaction, lors d'une première charge à température ambiante. Le stockage ou le fonctionnement du générateur à des températures élevées, notamment de l'ordre de 60°C, complètent la formation de la couche de passivation. De plus, la couche de passivation formée au cours de la première charge se dissout dans l'électrolyte et permet aux solvants de se réduire et de passiver à nouveau la surface de l'électrode déprotégée. Ces deux phénomènes entraînent une augmentation supplémentaire de pression.

La solution consistant à effectuer la première charge du générateur en conditions ouvertes ne permet donc pas d'éviter l'augmentation de pression dans l'enceinte du générateur au cours de son stockage ou de son fonctionnement.

Le document JP-94-131 419 décrit un accumulateur au lithium à anode de carbone et à électrolyte non aqueux contenant des sulfures. L'addition des sulfures minimise la décomposition de l'électrolyte à la cathode lorsque l'accumulateur est stocké ou gardé en surcharge longtemps, et permet en particulier d'éviter la production de gaz à la cathode au moment de la surcharge. Les sulfures sont en effet oxydés à la cathode en cations soufrés selon une réaction réversible. Cette réaction se produit avant l'oxydation des composants de l'électrolyte.

Le document FR-2 719 161 décrit un générateur rechargeable au lithium à anode de carbone comprenant un électrolyte contenant un mélange d'au moins deux solvants organiques et un additif soluble dans l'électrolyte, de même nature que l'un au moins desdits solvants et comportant au moins une liaison insaturée. Lorsque le mélange de solvants comporte au moins un carbonate dont les liaisons sont saturées, l'additif est le carbonate de vinylène ou un de ses dérivés. Cet additif permet de limiter l'exfoliation de l'anode de carbone au cours du fonctionnement du générateur.

Les inventeurs ont maintenant trouvé qu'il était possible de diminuer notablement l'augmentation de pression généralement observée dans les générateurs classiques à électrolyte organique et anode de carbone, en ajoutant à l'électrolyte un additif particulier.

Ledit additif est un composé organique comportant un atome X relié à au moins un atome d'oxygène, la ou les liaisons X-oxygène étant électroniquement conjuguées avec au moins une liaison insaturée et X représentant un atome de soufre ou de carbone.

L'additif présente la caractéristique de se réduire sur l'anode à un potentiel supérieur au potentiel de réduction de chacun des composants de l'électrolyte en formant une couche de passivation, si bien que les composants de l'électrolyte ne peuvent plus se réduire sur l'anode de carbone. Ledit additif diminue ainsi notablement la quantité de gaz générés lors de la réduction des composants de l'électrolyte.

La présente invention a pour objet un générateur électrochimique étanche rechargeable au lithium comportant une cathode, une anode contenant un matériau carboné et un électrolyte comprenant un sel de lithium et au moins un solvant organique, caractérisé en ce que ledit électrolyte comporte en outre un additif soluble dans l'électrolyte, qui est un composé organique comportant un atome X relié à au moins un atome d'oxygène, la ou les liaisons X-oxygène étant électroniquement conjuguées avec au moins une liaison insaturée et X représentant un atome de soufre ou de carbone, ledit composé étant choisi parmi les composés de formule générale (I) et (II) suivantes 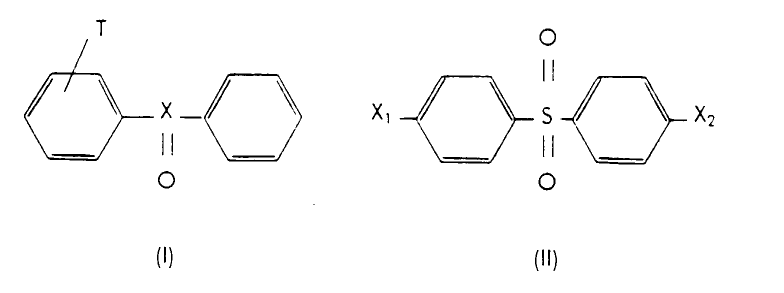 dans laquelle T, X₁ et X₂ représentent indépendamment l'un de l'autre un groupement donneur d'électrons choisi parmi H, R, OH, OR, NH2, NHR, SH, SR, l, F, Cl, Br, R étant un substituant alkyle comportant 1 à 6 atomes de carbone, T étant en position ortho ou para.

Selon une première variante de l'invention, l'additif est un composé de formule générale (I) dans laquelle X est le carbone et T est l'hydrogène.

Selon une deuxième variante de l'invention, l'additif est un composé de formule générale (I) dans laquelle X est le soufre et T est l'hydrogène.

Selon une troisième variante de l'invention, l'additif est un composé de formule générale (II) dans laquelle X est le soufre et T est l'hydrogène.

Les composés de formules (I) et (II) selon la présente invention se réduisent sur l'anode à un potentiel supérieur au potentiel de réduction de chacun des composants de l'électrolyte et forment une couche de passivation insoluble ou très peu soluble dans l'électrolyte à une température comprise entre 10 et 60°C.

Ainsi les additifs de formules (I) et (II) permettent de limiter l'augmentation de pression dans l'enceinte du générateur selon la présente invention lors d'une première charge en conditions étanches et permettent également, en formant une couche de passivation stable, de limiter l'augmentation de pression supplémentaire observée au cours du stockage ou du fonctionnement du générateur.

De préférence, l'additif est ajouté dans une proportion de 0,01% à 10% en volume dudit électrolyte.

L'électrolyte contient avantageusement au moins deux solvants organiques. Le premier desdits solvants a une constante diélectrique ε supérieure à 20 et favorise la dissociation du sel de lithium. Le deuxième desdits solvants a une viscosité η à température ambiante inférieure à 0,8cP et améliore la mobilité ionique.

A ces deux solvants peuvent être ajoutés d'autres solvants dont les caractéristiques peuvent être différentes.

De préférence, le premier solvant est choisi parmi les carbonates d'éthylène (EC) (ou 1-3-dioxolan-2-one) et de propylène (PC) (ou 4-méthyl-1-3-dioxolan-2-one) le carbonate de dipropyle, les anhydrides d'acide, la n-méthylpyrrolidone, la n-méthylacétamide (MA), la n-méthylformamide, la diméthylformamide (DMF), la γ-butyrolactone (γ-BI), l'acétonitrile, le sulfolane, le diméthylsulfoxyde (DMSO), le sulfite de diméthyle (DMS) et leurs mélanges.

De préférence, le deuxième solvant est choisi parmi les éthers, comme le 1,2-diéthoxyéthane (DEE), le 1,2-diméthoxyéthane (DME) et le 1,2-dibutoxyéthane (DBE), les esters comme l'acétate, le butyrate, le propionate et le formiate d'éthyle ou de méthyle, le carbonate de diéthyle (DEC) et le carbonate de diméthyle (DMC), le 1,3-dioxolane (DOL) et ses dérivés, comme le méthyldioxolane (MeDOL), le tétrahydrofurane (THF) et ses dérivés, comme le 2-méthyltétrahydrofurane (MeTHF), l'oxyde de propylène (PPO) et leurs mélanges.

Le sel de lithium est avantageusement choisi parmi le perchlorate de lithium LiClO₄, l'hexafluoroarsénate de lithium LiAsF₆, l'hexafluorophosphate de lithium LiPF₆, le tétrafluoroborate de lithium LiBF₄, le trifluorométhane-sulfonate de lithium LiCF₃SO₃, le trifluorométhane-sulfonimide de lithium LiN(CF₃SO₂)₂, le trifluorométhane-sulfoneméthide de lithium LiC(CF₃SO₂)₃ et leurs mélanges.

La cathode est de préférence une cathode à base d'oxyde de métaux de transition choisis parmi les oxydes lithiés de manganèse, nickel, cobalt, fer et leurs mélanges.

L'anode est de préférence une anode à base de lithium métallique ou de composés d'insertion du lithium tel qu'un matériau carboné ou un oxyde. Le matériau carboné est par exemple le coke, le carbone vitreux, le graphite, les carbones graphités, et l'oxyde est choisi par exemple parmi SnO, SnO₂ et TiO.

La présente invention a également pour objet l'utilisation d'un composé organique comportant un atome X relié à au moins un atome d'oxygène, la ou les liaisons X-oxygène étant électroniquement conjuguées avec au moins une liaison insaturée, et X représentant un atome de soufre ou de carbone pour la fabrication d'un générateur étanche rechargeable au lithium comportant une anode contenant un matériau carboné et un électrolyte organique comprenant un sel de lithium dont l'augmentation de pression relative au cours de son stockage ou de son fonctionnement est inférieure à environ 0,4 bar.

Il a été découvert dans le cadre de la présente invention que le carbonate de vinylène (aussi appelé carbonate de vinylidène) et ses dérivés permettent également de diminuer notablement l'augmentation de pression observée dans les générateurs à anode de carbone et électrolyte organique.

Le carbonate de vinylène et ses dérivés correspondent à un composé organique comportant un atome X relié à au moins un atome d'oxygène, la liaison X-oxygène étant électroniquement conjuguée avec au moins une liaison insaturée, pour lequel X représente C. Ils sont connus par ailleurs comme additifs de générateur pour limiter l'exfoliation du matériau carboné.

On entend par dérivés du carbonate de vinylène des composés possédant au moins une liaison insaturée reliée à un atome de carbone du cycle, comme par exemple le carbonate de propylidène, le carbonate d'éthylidène-éthylène ou le carbonate d'isopropylidène éthylène.

D'autres caractéristiques et avantages de la présente invention apparaîtront à la lecture des exemples suivants de modes de réalisation, donnés à titre illustratif et non limitatif, en référence aux dessins annexés sur lesquels :
- la figure 1 représente la variation de pression relative au cours de la première charge dans l'enceinte d'un générateur de l'art antérieur, doté d'une électrode de carbone, ledit générateur contenant un électrolyte organique qui ne comprend pas l'additif selon l'invention,
- la figure 2 représente la variation de pression relative au cours de la première charge dans l'enceinte d'un générateur selon l'invention doté d'une électrode de carbone, ledit générateur contenant un électrolyte organique qui comprend un additif à fonction sulfoxyde selon l'invention,
- la figure 3 représente la variation de pression relative au cours de la première charge dans l'enceinte d'un générateur selon l'invention doté d'une électrode de carbone, ledit générateur contenant un électrolyte organique qui comprend un additif à fonction sulfone selon l'invention.
- la figure 4 représente l'intensité aux bornes de demi-piles bouton dotées d'une électrode de carbone de l'art antérieur (courbe 1) et selon l'invention (courbes 2 et 3) lors de leur première charge, en fonction du potentiel.

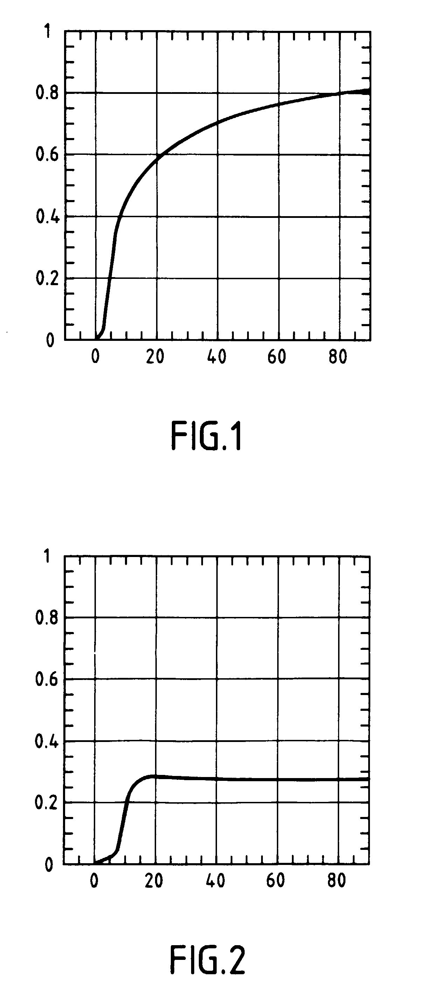

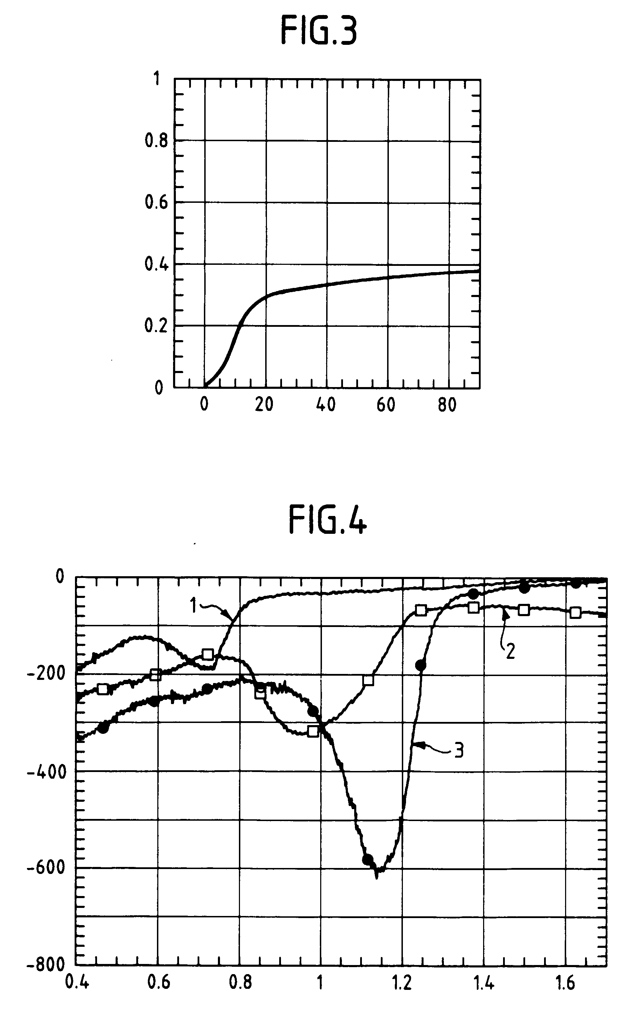

Sur les figures 1 à 3, l'augmentation de pression relative en bar est donnée en ordonnée, et le pourcentage de la capacité chargée du générateur est donnée en abscisse. Sur la figure 4, l'intensité en µAmpère est donnée en ordonnée et le potentiel en Volt par rapport à une électrode de référence Li/Li⁺ est donné en abscisse.

### EXEMPLE 1 :

On réalise une électrode à partir du mélange de 85% en poids de matériau carboné cristallisé de type graphite artificiel, de 11% en poids de polyfluorure de vinylène et de 4% d'agent d'adhésion déposé sur un collecteur de cuivre.

L'électrode est ensuite montée comme anode dans un générateur rechargeable prismatique face à une cathode constituée majoritairement d'oxyde de nickel lithié.

Le générateur contient un séparateur microporeux constitué d'un mélange de polyéthylène et de polypropylène et un électrolyte comportant un mélange de solvants et un sel de lithium. Le mélange de solvants est composé d'une partie en volume de carbonate de propylène, d'une partie en volume de carbonate d'éthylène et de trois parties en volume de carbonate de diméthyle. Le sel de lithium est l'hexafluorophosphate de lithium qui est ajouté à une concentration de 1 M.

Le générateur est placé dans une enceinte étanche pourvue d'un capteur de pression à une température d'environ 20°C, puis chargé à un régime galvanostatique de lc/10 (Ic étant le régime permettant de charger la capacité nominale du générateur électrochimique en une heure). L'augmentation de pression en fonction du pourcentage de capacité chargé est présentée figure 1.

On constate que la pression au sein du générateur de l'art antérieur augmente de 0,8 bar au cours de sa première charge.

On observe un pic de passivation de l'électrolyte à 0,7 Volt environ par rapport au couple Li/Li⁺ (courbe 1 de la figure 4).

### EXEMPLE 2 :

On réalise un générateur identique à celui décrit dans l'exemple 1 mais dans lequel on a ajouté à l'électrolyte 5% en volume de diphénylsulfone.

Les conditions de la première charge sont analogues à celles données dans l'exemple 1. L'augmentation de pression lors de la première charge est donnée sur la figure 2. Elle est de 0,28 bar, tandis qu'elle atteint 0,8 bar pour un générateur de l'art antérieur.

On observe un pic de passivation de l'électrolyte à 1 Volt environ par rapport au couple Li/Li⁺ (courbe 2 de la figure 4), ce qui prouve que l'additif de diphénylsulfone s'est réduit sur l'électrode de carbone avant le carbonate de propylène, le carbonate d'éthylène et le carbonate de diméthyle.

### EXEMPLE 3 :

On réalise un générateur identique à celui décrit dans l'exemple 1 mais dans lequel on a ajouté à l'électrolyte 5 % en volume de diphénylsulfoxyde dans le mélange de solvants.

Les conditions de la première charge sont analogues à celles données dans l'exemple 1. L'augmentation de pression lors de la première charge est donnée sur la figure 3. Elle est de 0,38 bar, tandis qu'elle atteint 0,8 bar pour un générateur de l'art antérieur.

On observe un pic de passivation de l'électrolyte à 1,15 Volt environ par rapport au couple Li/Li⁺ (courbe 3 de la figure 4), ce qui prouve que l'additif de diphénylsulfoxyde s'est réduit sur l'électrode de carbone avant le carbonate de propylène, le carbonate d'éthylène et le carbonate de diméthyle.

Il est clair que l'additif selon l'invention diminue la quantité de gaz formé au cours de la première charge d'un générateur électrochimique étanche rechargeable au lithium à anode de carbone.

## Revendications

1. Générateur électrochimique étanche rechargeable au lithium comportant une cathode, une anode contenant un matériau carboné et un électrolyte comprenant un sel de lithium et au moins un solvant organique, caractérisé en ce que ledit électrolyte comporte en outre un additif soluble dans l'électrolyte, qui est un composé organique comportant un atome X relié à au moins un atome d'oxygène, la ou les liaisons X-oxygène étant électroniquement conjuguées avec au moins une liaison insaturée et X représentant un atome de soufre ou de carbone, ledit composé étant choisi parmi les composés de formule générale (I) et (II) suivantes 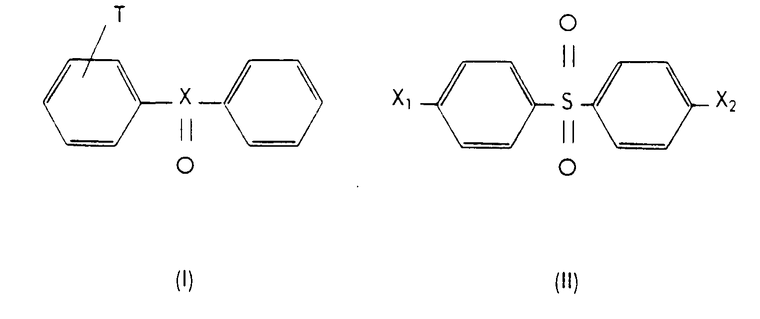 où X est choisi parmi S et C, et dans laquelle T, X₁ et X₂ représentent indépendamment l'un de l'autre un groupement donneur d'électrons choisi parmi H, R, OH, OR, NH2, NHR, SH, SR, l, F, Cl, Br, R étant un substituant alkyle comportant 1 à 6 atomes de carbone, T étant en position ortho ou para.

2. Générateur selon la revendication 1, dans lequel ledit additif est un composé de formule générale (I) dans laquelle X est C et T représente H.

3. Générateur selon la revendication 1, dans lequel ledit additif est un composé de formule générale (I) dans laquelle X est S et T représente H.

4. Générateur selon la revendication 1, dans lequel ledit additif est un composé de formule générale (II) dans laquelle X est S et X₁ et X₂ représentent H.

5. Générateur selon l'une des revendications précédentes, dans lequel ledit additif est ajouté dans une proportion de 0,01% à 10% en volume dudit électrolyte.

6. Générateur selon l'une des revendications précédentes, dans lequel
• le premier desdits solvants est choisi parmi les carbonates d'éthylène et de propylène, le carbonate de dipropyle, les anhydrides d'acide, la n-méthylpyrrolidone, la n-méthylacétamide, la n-méthylformamide, la diméthylformamide, la γ-butyrolactone, l'acétonitrile, le sulfolane, le diméthylsulfoxyde, le sulfite de diméthyle et leurs mélanges, et
• le deuxième desdits solvants est choisi parmi les éthers, les esters, le carbonate de diéthyle, le carbonate de diméthyle, le 1,3-dioxolane et ses dérivés, le tétrahydrofurane et ses dérivés, l'oxyde de propylène et leurs mélanges.

7. Générateur selon l'une des revendications précédentes, dans lequel ledit sel de lithium est choisi parmi le perchlorate de lithium, l'hexafluoroarsénate de lithium, l'hexafluorophosphate de lithium, le tétrafluoroborate de lithium, le trifluorométhane-sulfonate de lithium, le trifluorométhane-sulfonimide de lithium, le trifluorométhane-sulfoneméthide de lithium et leurs mélanges.

8. Générateur selon l'une des revendications précédentes, dans lequel ladite cathode est une cathode à base d'oxyde de métaux de transition choisis parmi les oxydes lithiés de manganèse, de nickel, de cobalt, de fer et leurs mélanges.
